# DEMANDE DE BREVET EUROPEEN

(11) **EP 2 110 994 A1**
(43) Date de publication de la demande: **21.10.2009**
(21) Numéro de dépôt: 08104239.2
(22) Date de dépôt: 03.06.2008
(51) Int. Cl.: H04L 12/46

(54) **Dispositif et procédés de télécommunication**

(30) Priorité: 06.06.2007 FR 0755503
(71) Demandeur: Alcatel Lucent, 75008 Paris (FR)
(72) Inventeur: De Juan Huarte, Federico, 75014, PARIS (FR); Conte, Alberto, 94230, CACHAN (FR)
(74) Mandataire: Thibaud, Jean-Baptiste

(57) **Abrégé**

Dispositif de télécommunication (14) entre un terminal utilisateur (11) et un serveur réseau L2TP (15), comprenant des moyens de réception d'une trame IP en provenance du terminal utilisateur, des moyens de génération (4) d'une trame de niveau 2 dans laquelle est encapsulée ladite trame IP, et des moyens d'envoi (5) de la trame de niveau 2 au serveur réseau L2TP par une liaison L2TP, caractérisé en ce que ladite trame de niveau 2 est une trame Ethernet, ledit dispositif de télécommunication comprenant des moyens de génération d'une table de correspondance d'adresse source et des moyens de génération d'une table de correspondance d'adresse destination, lesdits moyens de génération (4) d'une trame de niveau 2 étant aptes à déterminer l'adresse source de la trame Ethernet en fonction de l'adresse source de la trame IP et de la table de correspondance d'adresse source, et à déterminer l'adresse destination de la trame Ethernet en fonction de l'adresse destination de la trame IP et de la table de correspondance d'adresse destination.

## Description

La présente invention se rapporte à un dispositif et un procédé de télécommunication. En particulier, la présente invention se rapporte à un dispositif et un procédé de télécommunication destiné à offrir un service de connectivité Ethernet dans un réseau Wimax, même si l'interface avec le terminal utilisateur n'inclut pas de couche Ethernet.

Le document US 2005/0201388 A1 décrit une application connue du protocole L2TP. Dans ce document, un terminal utilisateur communique avec un serveur GGSN selon le protocole IP, en passant sur une liaison radio WCDMA. Le protocole L2TP est utilisé pour transmettre les trames IP reçues du terminal utilisateur vers un serveur réseau L2TP (LNS), afin de créer un réseau privé virtuel (VPN). Pour cela, les trames IP sont encapsulées dans des trames PPP qui sont transmises par la liaison L2TP.

Le protocole PPP correspond à une liaison point à point. Une trame PPP ne contient donc pas d'adresse source et son adresse destination a une valeur constante. Le procédé du document US 2005/0201388 A1 précité ne permet donc pas d'utiliser une liaison de niveau 2 du type multipoints, par exemple une liaison Ethernet.

On connaît également des réseaux Wimax dans lesquels un terminal utilisateur, par exemple un ordinateur portable ou un téléphone mobile, communique avec le réseau d'accès radio (RAN) d'un opérateur. Le réseau de l'opérateur comprend notamment des stations de base (BS), des passerelles d'accès et un serveur Home Agent (HA). Dans la solution normalisée par Wimax Forum, le terminal utilisateur communique avec les éléments du réseau d'opérateur en utilisant un protocole IP mobile : au niveau liaison, la couche de convergence des services utilise le protocole IP directement sur IEEE 802.16. Il n'y a pas de service Ethernet offert au terminal utilisateur. On parle dans ce cas d'un réseau Wimax avec IP-CS (Convergence Sublayer).

Dans ce type de réseau, il n'est pas possible d'offrir des services Ethernet, car les trames émises et reçues par le terminal utilisateur ne contiennent pas d'information de Ethernet, notamment pas d'adresses source et destination de niveau 2 (adresse MAC). Notamment, le terminal utilisateur ne peut pas se connecter à un réseau privé d'entreprise par la création un réseau privé virtuel par des moyens de niveau 2.

La présente invention vise à fournir un dispositif et un procédé de télécommunication qui ne présentent pas au moins certains des inconvénients précités de l'art antérieur.

En particulier, la présente invention vise à fournir un procédé et un dispositif de télécommunication qui permettent d'offrir une connectivité Ethernet, par exemple la création d'un réseau privé virtuel, entre un terminal utilisateur et un serveur réseau L2TP, alors qu'il n'y a pas de service Ethernet offert au terminal utilisateur. L'invention peut trouver application notamment dans un réseau Wimax avec IP-CS.

Pour cela, l'invention fournit un procédé de télécommunication entre un terminal utilisateur et un serveur réseau L2TP, comprenant les étapes consistant à :
- recevoir une trame IP en provenance du terminal utilisateur,
- générer une trame de niveau 2 dans laquelle est encapsulée ladite trame IP,
- envoyer la trame de niveau 2 au serveur réseau L2TP par une liaison L2TP,
caractérisé en ce que ladite trame de niveau 2 est une trame Ethernet, ledit procédé de télécommunication comprenant les étapes consistant à :
- générer une table de correspondance d'adresse source,
- générer une table de correspondance d'adresse destination,
l'adresse source de la trame Ethernet étant déterminée en fonction de l'adresse source de la trame IP et de la table de correspondance d'adresse source, l'adresse destination de la trame Ethernet étant déterminée en fonction de l'adresse destination de la trame IP et de la table de correspondance d'adresse destination.

De préférence, la génération de la table de correspondance d'adresse source comprend le fait de lire une adresse IP et une adresse Ethernet dans une trame DHCP, et mémoriser la correspondance entre l'adresse IP et l'adresse Ethernet lues dans la table de correspondance d'adresse source.

Avantageusement, la génération de la table de correspondance d'adresse destination comprend le fait d'envoyer un message de résolution d'adresse selon le protocole ARP, de lire une adresse IP et une adresse Ethernet dans une trame ARP de réponse, et de mémoriser la correspondance entre l'adresse IP et l'adresse Ethernet lues dans la table de correspondance d'adresse destination.

Selon un mode de réalisation particulier, le terminal utilisateur est un terminal portable. De préférence, la trame IP est reçue après avoir été transmise sur un réseau sans fil. Selon un mode de réalisation particulier, le réseau sans fil est un réseau Wimax.

Avantageusement, le procédé comprend le fait d'établir un réseau privé virtuel entre le terminal utilisateur et le serveur réseau L2TP.

L'invention fournit également un dispositif de télécommunication entre un terminal utilisateur et un serveur réseau L2TP, comprenant des moyens de réception d'une trame IP en provenance du terminal utilisateur, des moyens de génération d'une trame de niveau 2 dans laquelle est encapsulée ladite trame IP, et des moyens d'envoi de la trame de niveau 2 au serveur réseau L2TP par une liaison L2TP, caractérisé en ce que ladite trame de niveau 2 est une trame Ethernet, ledit dispositif de télécommunication comprenant des moyens de génération d'une table de correspondance d'adresse source et des moyens de génération d'une table de correspondance d'adresse destination, lesdits moyens de génération d'une trame de niveau 2 étant aptes à déterminer l'adresse source de la trame Ethernet en fonction de l'adresse source de la trame IP et de la table de correspondance d'adresse source, et à déterminer l'adresse destination de la trame Ethernet en fonction de l'adresse destination de la trame IP et de la table de correspondance d'adresse destination.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une représentation schématique d'un réseau Wimax comprenant un dispositif de télécommunication selon un mode de réalisation de l'invention,
- la figure 2 représente schématiquement un dispositif de télécommunication selon un mode de réalisation de la présente invention.

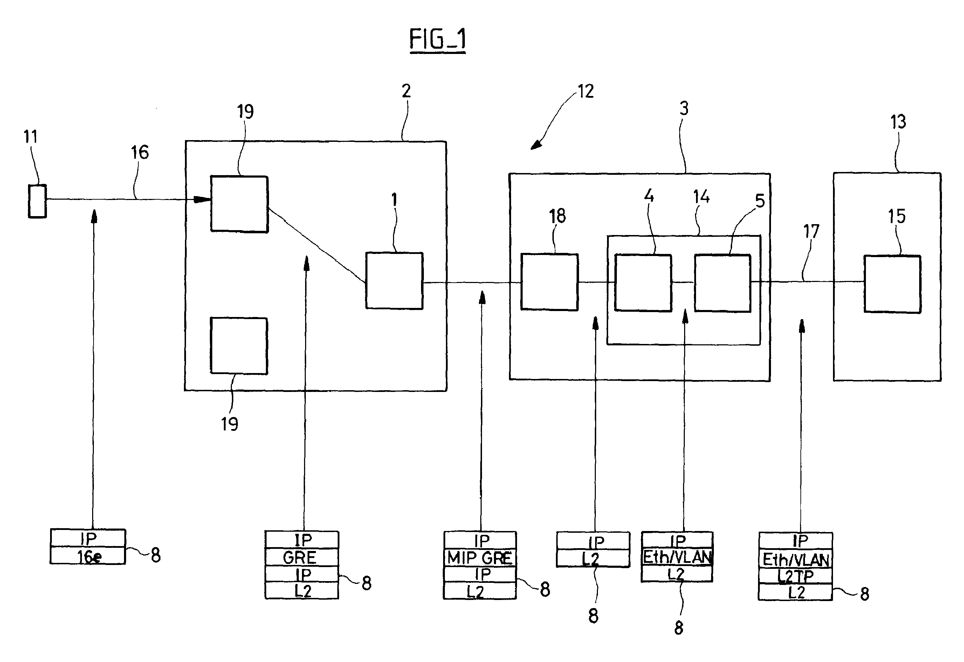

Sur la figure 1, on a représenté différents éléments d'un réseau Wimax avec IP-CS. Le terminal utilisateur 11 est relié au réseau d'opérateur 12 par une liaison radio 16. Le réseau d'opérateur 12 comprend un sous-réseau d'accès 2 dans lequel se trouvent des stations de base 19 et une passerelle d'accès 1, et un sous-réseau d'infrastructure 3 dans lequel se trouve un serveur Home Agent 18. Un réseau client 13, comprenant un serveur réseau L2TP 15 (LNS), est relié au sous-réseau d'infrastructure 3 par une liaison 17. Le fonctionnement général des éléments précités est connu et n'est pas décrit en détail.

Un dispositif de communication 14 est situé dans le sous-réseau d'infrastructure 3, à côté d'un serveur Home Agent 18. Dans un autre mode de réalisation, le dispositif de communication 14 pourrait se trouver ailleurs dans le réseau d'opérateur 12, par exemple à côté d'une passerelle d'accès 1.

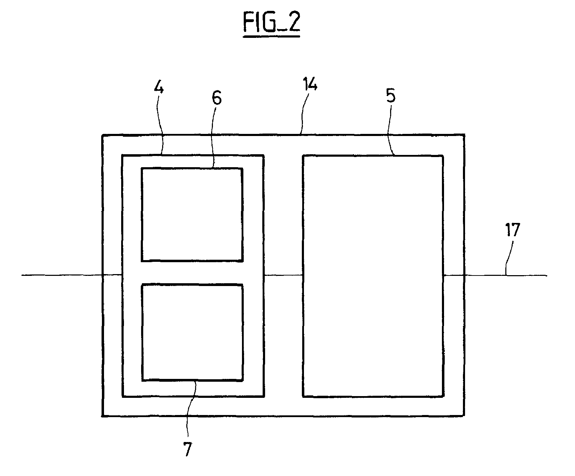

Sur la figure 2, les cadres 8 indiquent les piles de protocoles utilisées pour communiquer entre les différents éléments. La première case indique le protocole utilisateur, qui est le protocole IP. Les trames IP du protocole utilisateur peuvent être transmises de bout en bout, c'est-à-dire du terminal utilisateur 11 au serveur réseau L2TP 15, en passant par les différents éléments de communications représentés.

Sur la liaison radio 16, les trames IP passent directement sur le protocole IEEE 802.16e. Autrement dit, il n'y a pas de couche Ethernet.

Entre la station de base 19, la passerelle d'accès 1 et le serveur Home Agent 18, les protocoles utilisés sont GRE, Mobile IP, IP et un ou plusieurs protocole(s) de niveau 2.

Le serveur Home Agent 18 peut donc transmettre une trame IP provenant du terminal utilisateur 11 au dispositif de télécommunication 14.

Le rôle du dispositif de télécommunication 14 est d'encapsuler cette trame IP dans une trame Ethernet (Case Eth/VLAN des cadres 8) et de transmettre la trame Ethernet générée vers le serveur réseau L2TP 15 sur la liaison 17, conformément au protocole L2TP. Pour cela, le dispositif de télécommunication comprend un module de génération d'une trame Ethernet 4, et un serveur d'accès L2TP 5 (LAC). Le module de génération 4 est apte à générer une trame Ethernet, en déterminant ses données d'entête, et le serveur d'accès L2TP 5 est apte à transmettre la trame Ethernet générée au serveur réseau L2TP 15.

Le dispositif de télécommunication 14 est représenté plus en détail sur la figure 2. Le module de génération 4 comprend un module d'adresse source 6 et un module d'adresse destination 7. Le module d'adresse source 6 est apte à générer une table de correspondance d'adresse source, qui donne la correspondance entre des adresses source IP et des adresses source Ethernet. Similairement, le module d'adresse destination 7 est apte à générer une table de correspondance d'adresse destination, qui donne la correspondance entre des adresses destination IP et des adresses destination Ethernet. La génération de ces tables sera décrite ci-dessous.

Le fonctionnement du dispositif de télécommunication 14 est le suivant. Quand le terminal utilisateur 11 désire communiquer avec un serveur de données (non représenté) situé dans le réseau client 13, il envoi une trame IP avec pour adresse source sa propre adresse et comme adresse destination l'adresse IP du serveur de données. Cette trame IP est transférée jusqu'au dispositif de communication 14. Là, le module de génération 6 génère une trame Ethernet correspondant à la trame IP reçue.

Plus précisément, l'adresse source de la trame Ethernet est déterminée par le module d'adresse source 6, en fonction de l'adresse source de la trame IP et de la table de correspondance d'adresse source. Similairement, l'adresse destination de la trame Ethernet est déterminée par le module d'adresse destination 7, en fonction de l'adresse destination de la trame IP et de la table de correspondance d'adresse destination. Les champs de contrôles sont calculés et le champ de qualité de service est déterminé en fonction du champ correspondant de la trame IP. Le champ charge utile de la trame Ethernet est la trame IP.

Ensuite, le serveur d'accès L2TP envoie la trame Ethernet ainsi générée vers le serveur réseau L2TP 15.

Inversement, quand le dispositif de communication 14 reçoit une trame Ethernet en provenance du serveur réseau L2TP 15, il extrait la trame IP contenue dans le champ charge utile de la trame Ethernet et l'envoi au terminal utilisateur 11.

La génération de la table de correspondance d'adresse source, par le module d'adresse source 6, est réalisée de la façon suivante. Quand le terminal utilisateur 11 est allumé en vue de son utilisation, il s'identifie vis-à-vis du réseau d'opérateur 12. Ensuite, pour déterminer ses paramètres de configuration IP, il envoie un message DHCP qui est transmis au réseau client 13. Un serveur DHCP présent dans le réseau client 13 envoie alors un message de réponse DHCP pour allouer une adresse IP au terminal utilisateur 11. Quand ce message de réponse DHCP passe dans le réseau d'opérateur 12, le module d'adresse source 6 peut le lire pour déterminer une correspondance entre l'adresse MAC du terminal utilisateur 11 et son adresse IP. Cette information est inscrite dans la table de correspondance d'adresse source.

La génération de la table de correspondance d'adresse destination, par le module d'adresse destination 7, est réalisée de la façon suivante. Quand le dispositif de communication 14 reçoit une trame IP en provenance du terminal utilisateur 11, il consulte la table de correspondance d'adresse destination. Si cette table contient déjà une information de correspondance entre l'adresse destination de la trame IP et une adresse destination Ethernet, cette information est utilisée pour générer la trame Ethernet. Dans le cas contraire, le module d'adresse destination envoi une trame de résolution d'adresse vers le réseau client 13, selon le protocole ARP. Il reçoit en réponse l'adresse Ethernet qui correspond à l'adresse destination IP, et inscrit cette information dans la table de correspondance d'adresse source.

On comprend des explications précédentes que l'expression « génération d'une table » est utilisée dans le présent contexte pour désigner les opérations consistant à créer une table de donnée quand aucune information n'est mémorisée, et mettre à jour la table de donnée quand elle a déjà été créée. Ces tables peuvent être stockées dans une mémoire ou tout autre dispositif de stockage numérique.

Une application du dispositif de télécommunication 14 consiste à créer un réseau privé virtuel (VPN) entre le réseau client 13 et le terminal utilisateur 11 : du point de vue du LNS 15, il est possible de communiquer avec le terminal utilisateur 11 par une communication Ethernet, bien qu'en réalité le réseau d'opérateur 12 n'utilise pas de protocole Ethernet pour communiquer avec le terminal utilisateur 11 sur la liaison radio 16.

Bien entendu, les différents éléments décrits ci-dessus peuvent être réalisés sous forme de matériel spécifique, de logiciel spécifique s'exécutant sur du matériel générique, ou d'une combinaison des deux cas.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de télécommunication entre un terminal utilisateur (11) et un serveur réseau L2TP (15), comprenant les étapes consistant à :
- recevoir une trame IP en provenance du terminal utilisateur, ladite trame IP étant transmise par le terminal utilisateur sur une liaison sans fil dénuée de couche Ethernet,
**caractérisé en ce que** ledit procédé de télécommunication comprend les étapes consistant à :
- générer une trame Ethernet (4) dans laquelle est encapsulée ladite trame IP,
- envoyer la trame Ethernet au serveur réseau L2TP par une liaison L2TP (17),
- générer une table de correspondance d'adresse source (6),
- générer une table de correspondance d'adresse destination (7),
l'adresse source de la trame Ethernet étant déterminée en fonction de l'adresse source de la trame IP et de la table de correspondance d'adresse source, l'adresse destination de la trame Ethernet étant déterminée en fonction de l'adresse destination de la trame IP et de la table de correspondance d'adresse destination.

2. Procédé de télécommunication selon la revendication 1, dans lequel la génération de la table de correspondance d'adresse source comprend le fait de lire une adresse IP et une adresse Ethernet dans une trame DHCP, et mémoriser la correspondance entre l'adresse IP et l'adresse Ethernet lues dans la table de correspondance d'adresse source.

3. Procédé de télécommunication selon l'une des revendications 1 à 2, dans lequel la génération de la table de correspondance d'adresse destination comprend le fait d'envoyer un message de résolution d'adresse selon le protocole ARP, de lire une adresse IP et une adresse Ethernet dans une trame ARP de réponse, et de mémoriser la correspondance entre l'adresse IP et l'adresse Ethernet lues dans la table de correspondance d'adresse destination.

4. Procédé de télécommunication selon l'une des revendications 1 à 3, dans lequel le terminal utilisateur est un terminal portable.

5. Procédé de télécommunication selon l'une des revendications 1 à 4, dans lequel la trame IP est reçue après avoir été transmise sur un réseau sans fil.

6. Procédé de télécommunication selon la revendication 5, dans lequel le réseau sans fil est un réseau Wimax (12).

7. Procédé de télécommunication selon l'une des revendications 1 à 6, comprenant le fait d'établir un réseau privé virtuel entre le terminal utilisateur et le serveur réseau L2TP.

8. Dispositif de télécommunication (2, 3) destiné à établir une communication entre un terminal utilisateur (11) et un serveur réseau L2TP (15), ledit dispositif comprenant :
des moyens de réception (19) pour recevoir une trame IP en provenance du terminal utilisateur sur une liaison sans fil (16) dénuée de couche Ethernet, **caractérisé en ce qu'**il comporte
des moyens de génération d'une table de correspondance d'adresse source (6) et des moyens de génération d'une table de correspondance d'adresse destination (7),
des moyens de génération (4) d'une trame Ethernet dans laquelle est encapsulée ladite trame IP, lesdits moyens de génération (4) d'une trame de niveau 2 étant aptes à déterminer l'adresse source MAC de la trame Ethernet en fonction de l'adresse source IP de la trame IP et de la table de correspondance d'adresse source, et à déterminer l'adresse destination MAC de la trame Ethernet en fonction de l'adresse destination IP de la trame IP et de la table de correspondance d'adresse destination,
et des moyens d'envoi (5) de la trame Ethernet au serveur réseau L2TP par une liaison L2TP.
